(19) Europäisches Patentamt
European Patent Office
Office européen des brevets

(11) Veröffentlichungsnummer: **0 126 329**
**B1**

(12) **EUROPÄISCHE PATENTSCHRIFT**

(45) Veröffentlichungstag der Patentschrift: **21.03.90**

(21) Anmeldenummer: **84104680.8**

(22) Anmeldetag: **26.04.84**

(51) Int. Cl.⁵: **C 08 K 5/10,** C 07 C 69/34, C 07 C 69/716, C 07 C 233/00, C 08 K 5/20

# (54) Härtungskomponente für Kunstharze, die zur Amid- oder Esterbildung mit Carbonsäuren befähigte Gruppen enthalten.

(30) Priorität: **28.04.83 DE 3315469**

(43) Veröffentlichungstag der Anmeldung:
**28.11.84 Patentblatt 84/48**

(45) Bekanntmachung des Hinweises auf die Patenterteilung:
**21.03.90 Patentblatt 90/12**

(84) Bennante Vertragsstaaten:
**AT BE DE FR GB IT NL SE**

(56) Entgegenhaltungen:
**EP-A-0 012 463**
**FR-A-1 447 188**
**FR-A-2 180 776**
**GB-A-2 063 248**
**US-A-2 687 429**
**US-A-2 808 418**

**BULLETIN OF ACADEMY OF SCIENCE OF USSR, Band 28, Nr. 3, März 1979, Teil I, Seiten 512-518, Plenum Publishing Corp., New York, US; Yu. N. OGIBIN et al.: "Homolytic addition of malonic and succinic acid esters to alkyl maleates"**

(73) Patentinhaber: **HOECHST AKTIENGESELLSCHAFT**
**Postfach 80 03 20**
**D-6230 Frankfurt am Main 80 (DE)**

(72) Erfinder: **Walz, Gerd, Dr.**
**Pfingstbornstrasse 99**
**D-6200 Wiesbaden (DE)**
Erfinder: **Theiling, Ernst-August, Dr.**
**Ubierstrasse 8**
**D-6238 Hofheim am Taunus (DE)**

**EP 0 126 329 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Es sind seit langem lagerstabile Zweikomponentenlacke bekannt, die aus einem zur Amid- oder Urethanbildung befähigten Basiskunstharz und einem blockierten multifunktionellen Isocyanat als Härtungskomponente bestehen (z. B. US-PS-2 995 531, GB-PS-873 264), und es ist auch bekannt, derartige Systeme in wasserlöslichen Formulierungen und insbesondere in Formulierungen für die Elektrotauchlackierung zu verwenden (DE-OS-2 057 799). Es sind weiter Einkomponentensysteme bekannt, bei denen ein teilweise blockiertes multifunktionelles Isocyanat über eine Urethan- oder Harnstoffgruppierung an das Basiskunstharz gebunden ist (DE-OS-2 020 905, DE-OS-2 252 536). Obwohl solche Lacksysteme sich in jüngerer Zeit vor allem für die kathodische Elektrotauchgrundierung eingeführt haben, besitzen sie doch den Nachteil, daß sie verhältnismäßig hohe Härtungstemperaturen verlangen, und daß die Einbrennverluste verhältnismäßig hoch sind. Ihre Herstellung verlangt außerdem den Umgang mit großen Mengen von Isocyanaten, was wegen der Giftigkeit dieser Verbindungen nicht unbedenklich ist. Auch verbietet es sich, leichtflüchtige Alkohole, insbesondere Methanol oder Ethanol, als Verkappungsmittel einzusetzen, weil deren Urethane unterhalb etwa 250°C stabil sind.

Aus der europäischen Patentschrift 12463 ist die Härtung von Amino-polyether-polyolen durch Umesterung mit β-Hydroxyalkylestern von multifunktionellen Carbonsäuren und die Einbrennverluste sind sehr hoch, wobei außerdem die Abspaltprodukte wenig umweltfreundlich sind.

Um zu niedrigeren Einbrenntemperaturen zu gelangen, wurde auch schon vorgeschlagen (vgl. EP-OS-82 291), Mischester der Malonsäure, insbesondere Alkandiol-bismalonsäureethylester oder Trimethylolpropan-trismalonsäureethylester als Härter für zur Amid- oder Esterbildung befähigte Basiskunstharze zu verwenden.

Diese Härter weisen zwar relativ niedrige Einbrennverluste auf, und als Abspaltprodukt findet sich im wesentlichen nur das unproblematische Ethanol. In wäßrigen Systemen, wie sie für die Elektrotauchlackierung verwendet werden, sind diese Härtungskomponenten aber hydrolyseempfindlich, so daß es schwierig ist, den pH-Wert und den MEQ-Wert der Lackierbäder konstant zu halten. In Lackierbädern für die kathodische Elektrotauchlackierung wandert darüber hinaus der teilweise verseifte Härter als Carbonsäure zur Anode und geht damit verloren.

Es besteht also die Aufgabe, eine Härtungskomponente für Kunstharze mit zur Amid- und/oder Esterbildung mit Carbonsäuren befähigten Gruppen zur Verfügung zu stellen, mit der die Härtung bei Temperaturen unterhalb etwa 180°C möglich ist, mit der kleinere Mengen an die Umwelt nicht oder wenig belastenden Abspaltprodukten entstehen, und die in wäßrigen Systemen, insbesondere Systemen zur Elektrotauchlackierung, über längere Zeiträume stabil sind.

Gegenstand der Erfindung ist die Verwendung von Michael-Additionsprodukten aus zur Michael-Addition befähigten Mono- oder Dicarbonsäureestern aus der Gruppe Ester der Malonsäure, Cyanessigsäure, Acetessigsäure, Acetondicarbonsäure oder an der CH-aciden Methylengruppe mono-alkylsubstituierten Derivaten dieser Säuren, und Verbindungen, die mindestens eine zur Michael-Addition befähigte Doppelbindung enthalten aus der Gruppe Ester, Amid, Urethan- oder Harnstoffderivat einer α,β-ungesättigten Mono- oder Dicarbonsäure, wobei die Michael-Additionsprodukte im Mittel mindestens zwei umesterungs- bzw. umamidierungsfähige Estergruppen pro Molekül aufweisen, als Härter für Kunstharze, die Hydroxyl- und/oder Aminogruppen enthalten.

Weiterhin bezieht sich die Erfindung auf Kunstharze, welche diese estergruppenhaltigen Michael-Additionsprodukte entweder chemisch gebunden oder in Mischung enthalten.

Als Härtungskomponente gemäß der Erfindung eignet sich eine große Zahl Verbindungen, die Michael-Additionsprodukte von zur Michael-Addition befähigten Mono- oder Dicarbonsäureestern an Verbindungen mit mindestens einer zur Michael-Addition befähigten Doppelbindung sind. Durch die Michael-Addition von ungesättigten Verbindungen mit verhältnismäßig geringem Molekulargewicht an die genannten Mono- oder Dicarbonsäureester entstehen Verbindungen, deren Dampfdruck unter Einbrennbedingungen niedrig genug ist, so daß die Ester nicht aus dem zu härtenden Lackfilm entweichen. Überraschenderweise wird aber auch die Hydrolyseanfälligkeit der Ester dadurch drastisch herabgesetzt, so daß die in wäßrigen Systemen für die Elektrotauchlackierung als Härterkomponente eingesetzt werden können.

Als zur Michael-Addition befähigte Mono- oder Dicarbonsäureester (= Michael-Donator) werden erfindungsgemäß die Ester der Malonsäure, der Acetessigsäure, der Cyanessigsäure und der Acetondicarbonsäure verwendet, die an den aciden Methylengruppen auch mit einem Alkylrest substituiert sein können. Als Veresterungskomponente kommen dabei bevorzugt geradkettige oder verzweigte Alkanole mit vorzugsweise 1 bis 8 Kohlenstoffatomen, insbesondere Methanol und Ethanol in Frage. Es kann vorteilhaft sein, wenn die Veresterungskomponente zum Teil aus einem verzweigten Alkanol, insbesondere 2-Ethylhexanol besteht, da damit in manchen Fällen der Neigung einer Lackschicht zur Kraterbildung beim Einbrennen entgegen gewirkt werden kann. Die Methyl- und Ethylester ergeben besonders niedrige Einbrenntemperaturen und niedrige Abspaltverluste, wobei die Ethylester bezüglich der Abspaltprodukte außerdem besonders unbedenklich sind.

Verbindungen die zur Michael-Addition befähigte Doppelbindungen enthalten (= Michael-Akzeptor), sind die Ester, Amide und Urethan- oder Harnstoffderivate von α,β-ungesättigten Mono- oder Dicarbonsäuren, insbesondere die Ester, Amide und Harnstoffderivate der Acrylsäure, Methacrylsäure, Dimethylacrylsäure, Crotonsäure, Maleinsäure und Fumarsäure.

Nach einer Ausführungsform der Erfindung ist die Härtungskomponente ein Michael-Additionsprodukt eines zur Michael-Addition befähigten Mono- oder Dicarbonsäureesters an einen Ester einer α,β-ungesättigten Mono- oder Dicarbonsäure mit einem Polyol, das vorzugsweise 2 bis 4 Hydroxylgruppen aufweist. Insbesondere kann dabei der Ester der α,β-ungesättigten Säure ausgewählt sein aus der Gruppe der Alkandioldiacrylate oder -dimethacrylate, Trimethylolpropantriacrylat oder -trimethacrylat und Pentaerythrit-tetraacrylat oder -tetra-methacrylat. Bei

diesen Estern handelt es sich um leicht zugängliche Handelsprodukte.

Eine andere Gruppe von Härtungskomponenten, die besonders die Haftung von damit gehärteten Lackfilmen auf Stahlblech und die Haftung von Beschichtungen auf PVC-Basis auf dem gehärteten Lackfilm günstig beeinflußt, umfaßt Michael-Additionsprodukte, die substituierte Urethane oder Harnstoffe der allgemeinen Formel

$$R_m[A\text{–}B\text{–}\overset{\overset{\displaystyle O}{\|}}{C}\text{–}Ac\text{–}M]_m \qquad (I)$$

darstellen, in welcher die einzelnen Zeichen folgende Bedeutung haben

| | |
|---|---|
| $R_m$ | ist der m-wertige Rest R-(NHCO-)$_m$ eines Isocyanats |
| m | ist eine ganze Zahl, mindestens 1 |
| A | ist eine chemische Bindung oder ein Amidoalkylen ein O-Alkylen, ein Amidocycloalkylen- oder ein O-Cycloalkylen-Rest |
| B | ist eine Amidogruppe oder ein Sauerstoffatom |
| COAc | ist der Acylrest einer α,β-ungesättigten Mono- oder Dicarbonsäure |
| M | ist der durch Michael-Addition an das Molekül gebundene Ester einer zur Michael-Addition befähigten Mono- oder Dicarbonsäure |

mit der Maßgabe, daß das Molekül mindestens zwei Estergruppen aus der zur Michael-Addition befähigten Säure enthält, und daß B eine Amidogruppe ist, wenn A eine chemische Bindung ist.

In einer vorteilhaften Abwandlung der vorstehend gemäß Formel (I) beschriebenen Härterkomponente ist A ein Rest der Formel

$$\begin{array}{l} -O\text{–}CH\text{–}CH_2- \\ \qquad\ \ | \\ \qquad CH_2 \\ \qquad\ \ | \\ \qquad O\text{–}C\text{–}R' \\ \qquad\quad\ \| \\ \qquad\quad\ O \end{array} \qquad (II)$$

wobei R' ein in α-Stellung zur Carboxylgruppe verzweigter Alkylrest mit 9 - 11 C-Atomen und B in Formel (I) ein Sauerstoffatom ist.

Lackfilme, die Verbindungen mit Resten der oben angeführten Formel (II) enthalten, neigen vielfach während des Einbrennens weniger zur Kraterbildung und weisen günstige Korrosionsschutzeigenschaften auf.

Erfindungsgemäß verwendete, die den Glycerinester einer in α-Stellung verzweigten Carbonsäure mit 9 - 11 C-Atomen als Molekülbestandteil enthalten, erhält man dadurch, daß man aus einer α,β-ungesättigten Dicarbonsäure, einem Diol und dem Glycidylester einer in α-Stellung verzweigten Carbonsäure mit 9 - 11 C-Atomen einen ungesättigten Mischester herstellt, und an diesen einen zur Michael-Addition befähigten Mono- oder Dicarbonsäureester anlagert.

Eine weitere Klasse von erfindungsgemäß verwendeten Härtungskomponenten sind die Michael-Additionsprodukte von zur Michael-Addition befähigten Mono- oder Dicarbonsäureestern an Amide von α,β-ungesättigten Mono- oder Dicarbonsäuren, z. B. an Methylenbisacrylamid, Toluylenbisacrylamid oder Hexamethylenbisacrylamid.

Die erfindungsgemäß verwendeten Härter können in Zweikomponentenlacken zusammen mit einem zur Amid- und/oder Esterbildung mit Carbonsäuren befähigten Kunstharz verwendet werden. Ebenso ist es möglich, das Michael-Additionsprodukt aus α,β-ungesättigter Mono- oder Dicarbonsäure und zur Michael-Addition befähigtem Mono- oder Dicarbonsäureester unmittelbar an das Kunstharzmolekül zu binden, wodurch selbsthärtende Kunstharze erhalten werden.

Beispielsweise erhält man ein Polyetherpolyol, das die erfindungsgemäße Härterkomponente enthält, und das sowohl als Härter für andere umesterungs- oder umamidierungsfähige Kunstharze als auch für sich als selbsthärtendes Kunstharz verwendet werden kann, indem man ein Epoxidharz mit einer α,β-ungesättigten Säure umsetzt und an den erhaltenen hydroxylgruppenhaltigen Ester einen zur Michael-Addition befähigten Mono- oder Dicarbonsäureester addiert.

Eine andere Möglichkeit, die Härtungskomponente an Kunstharzmoleküle zu binden, besteht z. B darin, einen Hydroxyester, einen Aminoester, ein Hydroxyamid oder ein Aminoamid einer α,β-ungesättigten Säure mit einem multifunktionellen Isocyanat in solcher Menge umzusetzen, daß noch freie Isocyanatgruppen verbleiben, die unter Urethan- oder Harnstoffbildung an ein Hydroxyl- oder Aminogruppen enthaltendes Molekül gebunden werden, und indem man an die so erhaltene Verbindung einen zur Michael-Addition befähigten Ester einer Mono- oder Dicarbonsäure addiert.

Man gelangt auf diesem Weg zu als Härtungskomponente geeigneten oder selbsthärtenden Polyetherpolyolen, Polyesterpolyolen, Aminopolyetherpolyolen, Aminopolyesterpolyolen und Polyaminopolyamiden.

An ungesättigte Polyester aus α,β-ungesättigten Dicarbonsäuren, insbesondere Maleinsäure oder Fumarsäure, und Polyolen lassen sich ebenfalls zur Michael-Addition befähigte Ester von Mono- oder Dicarbonsäuren addieren, und man erhält auf diesem Weg Härter oder, wenn der ungesättigte Polyester freie Hydroxylgruppen enthält, selbsthärtende Kunstharze gemäß der Erfindung.

Kunstharze, die mit der erfindungsgemäßen Härterkomponente bei erhöhter Temperatur gehärtet werden können, sind an sich bekannte Verbindungen mit Molekulargewichten von etwa 300 bis etwa 20 000, die zur Ester- oder Amidbildung befähigte Gruppen enthalten. Es sind dies beispielsweise Polymerisate aus olefinisch ungesättigten Monomeren, die als Bestandteil Hydroxyester und/oder Aminoester von olefinisch ungesättigten Säuren wie Aminoalkylacrylate oder Hydroxyalkylacrylate oder die entsprechenden Methacrylate enthalten. Eine weitere Gruppe sind die aus dimerisierten Fettsäuren und Polyaminen erhältlichen Polyamino-polyamide. Amino-polyether-polyole erhält man z. B. durch Umsetzung von Epoxidharzen aus Polyphenolen und Epihalogenhydrinen mit primären und/oder sekundären Aminen.

Kunstharze, die Carbonsäure- oder Aminogruppen enthalten, können vielfach durch Basen oder Säuren wasserlöslich gemacht und aus solchen Lösungen anodisch oder kathodisch abgeschieden werden. Aufgrund ihrer Hydrolysebeständigkeit eignen sich die erfindungsgemäßen Härterkomponenten besonders als Bestandteil solcher Elektrotauchlacke. Besonders gute Ergebnisse werden in Verbindung mit kationischen Amino-polyether-polyolen erhalten.

Die Härtung der amin- und/oder hydroxylhaltigen Kunstharze erfolgt durch Umamidierung und/oder Umesterung mit den durch Michael-Addition eingeführten Estergruppen bei erhöhter Temperatur, wobei die erforderliche Temperatur von der Alkoholkomponente dieser Ester abhängt und um so tiefer ist, je niedriger das Molekulargewicht der Alkoholkomponente ist. Besonders niedrige Härtungstemperaturen erhält man daher mit den Methyl- und Ethylestern. Durch Zusatz von Katalysatoren, die die Umesterung bzw. Umamidierung beschleunigen, können Härtungstemperaturen von etwa 140 - 160°C erreicht werden. Höhere Temperaturen bis etwa 250°C sind möglich. Als Katalysatoren eignen sich beispielsweise Metallsalze organischer Säuren, insbesondere Zink-, Blei-, Eisen- oder Chromoctoat oder -naphthenat.

Das Verhältnis von Harz zu Härter richtet sich nach der gewünschten Vernetzungsdichte und liegt im allgemeinen im Bereich von 0,2 bis 2 Estergruppen in der Härterkomponente pro Hydroxyl- oder Aminogruppe im Kunstharz. Entsprechendes gilt für selbstvernetzende Kunstharze.

Die Herstellung der erfindungsgemäß verwendeten Härterkomponenten erfolgt nach an sich bekannten Methoden.

So erhält man geeignete Addukte beispielsweise durch Michael-Addition von einem Mol eines geeigneten Dicarbonsäureesters, z. B. Malonsäuredialkylester oder Acetondicarbonsäuredialkylester an ein Mol eines Esters oder eines Amids einer α,β-ungesättigten Mono- oder Dicarbonsäure, z. B. Butylacrylat oder -methacrylat oder Dibutylmaleinat oder -fumarat.

Ist der zur Michael-Addition befähigte Carbonsäureester monofunktionell, so müssen selbstverständlich mindestens 2 Mol an eine mindestens zwei zur Michael-Addition befähigte Doppelbindungen pro Molekül enthaltende Verbindung addiert werden. Beispiele für derartige Verbindungen sind die Additionsprodukte von Acetessigsäureester oder Cyanessigsäureester an Diacrylate von Diolen, z. B. Ethylenglykoldiacrylat, Butandioldiacrylat oder Methylenbisacrylamid. Durch Variation der ungesättigten Ester- bzw. Amidkomponente und der Funktionalität des zur Michael-Addition befähigten Carbonsäureesters läßt sich die Funktionalität des Härters in weiten Grenzen variieren. So erhält man z. B. aus dem Trisacrylester von Trimethylolpropan und 3 Mol Acetessigester einen trifunktionellen Härter, und aus dem selben Acrylester und 3 Mol Malonsäureester einen hexafunktionellen Härter.

Der zur Michael-Addition befähigte Carbonsäureester kann an der CH-aciden Methylengruppe monosubstituiert sein. In diesem Fall werden mit α,β-ungesättigten Carbonylverbindungen, insbesondere Carbonsäurederivaten, Monoadditionsprodukte erhalten. Verfügt der genannte Carbonsäureester über eine unsubstituierte CH-acide Methylengruppe, so können oligomere Addukte erhalten werden, bei denen beide aciden H-Atome eine Michael-Addition mit einer α,β-ungesättigen Carbonylverbindung eingehen. Auch auf diesem Weg läßt sich das Molekulargewicht und die Funktionaliät der Härter und die Verteilung der zur Umesterung bzw. Umamidierung befähigten Estergruppen im Härtermolekül variieren und besonderen Anforderungen anpassen.

Härtungskomponenten, die Urethan- oder Harnstoffgruppen enthalten, und die der Formel I entsprechen, erhält man durch Umsetzung von Hydroxyestern, Hydroxyamiden, Amiden, Aminoestern oder Aminoamiden α,β-ungesättigter Säuren mit Isocyanaten und anschließende Michael-Addition eines zur Michael-Addition befähigten Mono- oder Dicarbonsäureesters. Als Isocyanate können dabei vor allem die großtechnisch verfügbaren Stoffe wie Toluylendiisocyanat, Hexamethylendiisocyanat und Isophorondiisocyanat in Frage kommen. Die Bildung des Harnstoffs oder Urethans verläuft im allgemeinen bei mäßigen Temperaturen und kann durch bekannte Katalysatoren, z. B. Dibutylzinndilaurat, beschleunigt werden. Wenn die Reaktion in einem Lösemittel durchgeführt werden soll, so wählt man ein gegenüber Isocyanaten inertes Lösemittel und für die die Herstellung von Härterkomponenten, die in wäßrigen Systemen eingesetzt werden sollen, vorzugsweise ein wasserlösliches Lösemittel wie Diethylenglykol-dimethylether, Aceton, Methylethylketon oder Methylisobutylketon.

Zu Härterkomponenten, die Amidogruppen enthalten, gelangt man, wenn man statt eines Esters oder Amids die freie α-β-ungesättigte Säure einsetzt. In diesem Fall bildet sich aus der Säure und dem Isocyanat unter Decarboxylierung direkt das entsprechende Amid.

Esterurethane der Formel (I), die gemäß Formel (II) substituiert sind, erhält man, indem man den Glycidylester einer in α-Stellung verzweigten aliphatischen Carbonsäure mit 9 - 11 C-Atomen zunächst mit einer α,β-ungesättigten Carbonsäure unter Öffnung des Epoxidrings verestert, an die dabei entstehende Hydroxylgruppe das Isocyanat anlagert und anschließend die Michael-Addition ausführt.

Die Michael-Addition verläuft grundsätzlich bei Raumtemperatur und sogar darunter. Sie kann durch

Temperaturerhöhung und Zugabe von Katalysatoren beschleunigt werden. Geeignete Katalysatoren sind basische Verbindungen wie Alkalihydroxide, Alkalialkoholate und basische Aminoverbindungen.

Die folgenden Beispiele dienen der Erläuterung der Erfindung:

In den folgenden Beispielen sind Teile (T) Gewichtsteile und Prozent (%) Gewichtsprozent.

**Beispiele**

**I. Herstellung der Härter**

1. Ein Gemisch aus 124 T Ethylenglykoldimethacrylat, 200 T Malonsäurediethylester und 12,5 T Kalilauge (30 % in Methanol) wird 6 Stunden auf 100°C erhitzt. Der Anteil an Doppelbindungen beträgt dann weniger als 0,2 %. Das Reaktionsgemisch wird darauf mit Ethylenglykolmonoethylether bis zu einem Festkörpergehalt von 90 % verdünnt. Man erhält eine hellgelbe, viscose, klare Flüssigkeit.
2. Ein Gemisch von 160 T Malonsäurediethylester, 113,2 T Hexandioldiacrylat und 10 T Kalilauge (30 % in Methanol) wird 4 Stunden auf 120°C erhitzt. Der Anteil der Doppelbindungen beträgt dann weniger als 0,2 %. Die Weiterverarbeitung des Reaktionsgemisches erfolgt wie nach Beispiel 1. Man erhält eine bernsteinfarbene, mäßig viskose, klare Flüssigkeit.
3. Ein Gemisch von 108 T Hydroxyethylacrylat, 81,8 T eines Gemisches von 2,4- und 2,6-Toluylendiisocyanat, 3 Tropfen Triethylamin und 21 T Diethylenglykoldimethylether wird 5 Stunden auf 60°C erhitzt. Der Isocyanatgehalt beträgt dann weniger als 0,2 %. Darauf werden 1 T Kalilauge (30 % in Methanol) und 128 T Malonsäurediethylester zugegeben und das Gemisch in zweiter Stufe 6 Stunden auf 120°C erhitzt. Der Anteil der Doppelbindungen beträgt dann weniger als 0,2 %. Es wird wie nach Beispiel 1 weitergearbeitet. Man erhält eine mittel bis stark gelb gefärbte, hochviskose, klare Flüssigkeit.
4. Ein Gemisch von 130 T Acetessigsäureethylester, 132 T Butandiolbisacrylat und 1 T Kalilauge wird 3 Stunden auf 120°C erhitzt, so daß der Anteil der Doppelbindungen weniger als 0,2 % beträgt. Die Weiterverarbeitung erfolgt wie nach Beispiel 1. Man erhält eine gelb gefärbte, mäßig viscose, durchscheinende Flüssigkeit. Ein Teil des Acetessigesters kann auch durch eine entsprechende molare Menge von Malonsäurediethylester ersetzt werden.
5. Ein Gemisch von 237,5 T Hydroxyethylacrylat, 217,5 T eines Gemisches von 2,4- und 2,6-Toluylendiisocyanat, 56,1 T Diethlylenglykoldimethylether und 0,5 T Zinkacetylacetonat wird 6 Stunden auf 60°C erhitzt, bis der Isocyanatanteil weniger als 0,2 % beträgt. Darauf wird das Reaktionsgemisch mit 1,2 T Kalilauge (30 % in Methanol) und 243,8 T Acetessigsäureethylester versetzt. In zweiter Stufe wird das Reaktionsgemisch 5 Stunden auf 120°C erhitzt. Der Anteil der Doppelbindungen, beträgt dann weniger als 0,3 %. Die Weiterverarbeitung erfolgt wie nach Beispiel 1. Man erhält eine leicht gelbliche, viscose, klare Flüssigkeit.
6. 260 Teile des Glycidylesters einer gesättigten, in α-Stellung verzweigten Fettsäure mit 9 - 11 C-Atomen mit einem Epoxidäquivalentgewicht von 260 werden mit 86 T Crotonsäure und 3 T eines vollständig entwässerten Chrom-IIIoctoats 18 Stunden auf 60°C erhitzt, bis die Säurezahl kleiner als 2 ist. Anschließend werden 105 T Isophorondiisocyanat und 0,5 T Zink-acetyl-acetonat zugesetzt und 8 Stunden auf 60°C erhitzt, bis der Gehalt an freiem Isocyanat weniger als 0,2 % beträgt. Darauf wird das Reaktionsgemisch mit 4 T Tetrabutylammoniumhydroxid und 160 T Malonsäurediethylester versetzt und 6 Stunden auf 120°C erhitzt. Anschließend wird mit Ethylenglykolmonoethylether auf 80 % Festkörpergehalt verdünnt. Man erhält eine grünliche, viskose, klare Flüssigkeit.
7. 74 T Acrylsäure werden mit 87 T Toluylendiisocyanat, 0,3 T Diazabicyclooctan, 1 T Hydrochinon und 50 T Diethylenglykoldimethylether auf 80°C erhitzt und so lange bei dieser Temperatur gehalten, bis die Säurezahl kleiner als 5 ist. Anschließend wird so lange auf 100°C erhitzt, bis kein Kohlendioxid mehr nachgewiesen werden kann. Dann werden 80 T Malonsäurediethylester, 65 T Acetessigsäureethylester und 2 T KOH zugesetzt und die Reaktionsmischung 8 Stunden auf 120°C erhitzt, bis der Doppelbindungsgehalt kleiner als 0,4 ist. Anschließend wird mit Ethylenglykolmonoethylether auf 70 % Festkörpergehalt verdünnt. Man erhält eine braun befärbte, trübe, sehr viscose Flüssigkeit.
8. 516 T Maleinsäurediethylester werden mit 128 T Ethylenglykol, 1 T Hydrochinon und 1 T Butyltitanat auf 170°C erhitzt und das freiwerdende Ethanol wird abdestilliert. Anschließend werden 390 T Acetessigester und 20 T Cholin bei 120°C zugesetzt und die Mischung 7 Stunden bei 120°C gehalten. Anschließend wird mit Ethylenglykolmonoethylether auf einen Festkörpergehalt von 80 % verdünnt. Man erhält eine bräunlich gefärbte, viscose, leicht getrübte Flüssigkeit.
9. 200 T Maleinsäureanhydrid werden mit 62 T Ethylenglykol und 0,5 T Diazabicyclooctan langsam auf 100°C erhitzt. Das Gemisch wird so lange bei 100°C gehalten, bis keine freien Anhydridgruppen mehr nachweisbar sind. Anschließend werden 520 T Glycidylester einer in α-Stellung verweigten Monocarbonsäure mit 9 - 11 C-Atomen zugesetzt und das Gemisch so lange auf 100°C erhitzt, bis die Säurezahl ($H_2O$) kleiner als 2 ist. Anschließend werden 320 T Malonsäurediethylester zugetropft und außerdem 2 T Natriummethylat zugefügt. Die Temperatur wird langsam auf 120°C erhöht und das Gemisch 5 Stunden bei dieser Temperatur gehalten, bis der Gehalt an Doppelbindungen weniger als 0,2 % beträgt. Anschließend wird mit Diethylenglykoldimethylether auf einen Festkörpergehalt von 80 % eingestellt. Man erhält eine bernsteinfarbene, viscose, leicht getrübte Flüssigkeit.
10. 4 000 T eines oligomeren ungesättigten Polyesters auf der Basis von Fumarsäure, Neopentylglykol und Trimethylolpropan mit einem Molekulargewicht von etwa 800 und einer Säurezahl von 20, der als 70 %-ige Lösung in Diethylenglykoldimethylether vorliegt, werden mit 260 T des Glycidylesters gemäß Beispiel 9 versetzt und das Gemisch so lange auf 120°C erhitzt, bis die Säurezahl kleiner als 2 ist. Anschließend werden 900 T

Acetessigsäureethylester und 50 T Benzyltrimethylammoniumhydroxyd zugesetzt und das Gemisch so lange auf 120°C erhitzt, bis der Gehalt an Doppelbindungen weniger als 0,2 % beträgt. Man erhält eine sehr hochviskose, bernsteinfarbene, leicht getrübte Flüssigkeit.

11. 184 Teile N,N' Methylenbisacrylamid werden mit 260 Teilen Acetessigsäureethylester, 111 Teilen Dimethyldiethylenglykolether und 3 T KOH (30 %-ig in Methanol) langsam auf 140°C erhitzt und solange bei dieser Temperatur gehalten, bis der Gehalt an Doppelbindungen kleiner als 0,2 % ist. Es wird eine viskose, bernsteinfarbene, getrübte Flüssigkeit erhalten.

12. 360 Teile des Diglycidyläthers von Bisphenol A werden mit 144 Teilen Acrylsäure und 2 Teilen eines entwässerten Chrom-(III)-octoats langsam auf 100°C erhitzt und solange bei dieser Temperatur gehalten bis die Säurezahl kleiner als 5 ist. Anschließend wird mit Ethylglykol verdünnt, so daß eine 80 %-ige Lösung entsteht.

Anschließend werden 260 Teile Acetessigsäureethylester und 3 g KOH ( 30 %-ig in Methanol) zugesetzt und die Mischung solange auf 120°C erhitzt bis der Gehalt an Doppelbindungen kleiner als 0.5 % ist. Man erhält ein selbsthärtendes Kunstharz.

**II. Herstellung der aminhaltigen Polymeren**

**Polyepoxid-Amin-Addukt A**

38,6 T Dimethylaminopropylamin)
16,1 T 2-Ethylhexylamin) Mischung I
79,2 T Ethylenglykolmonoethylether)

Mischung I wird auf eine Temperatur von ca. 143°C in einem 2-l-Kolben, ausgestattet mit Rückflußkühler, Rührer und elektrischer Widerstandsheizung, bis zum leichten Rückfluß erhitzt.

317 T Bisphenol A-Epoxidharz mit einem Epoxidäquivalentgewicht von 480 werden in 136 T Ethylenglykolmonoethylether aufgelöst und bei 143°C langsam innerhalb 1 Stunde zu Mischung I zugetropft. Anschließend läßt man 130 T epoxidiertes Sojaöl mit einem Epoxidäquivalentgewicht von 260 innerhalb einer Stunde bei 143°C zutropfen und hält das Gemisch danach noch 10 Stunden bei 143°C. Es wird eine 70 %-ige Lösung eines Epoxid-Amin-Adduktes in Ethylenglykolmonoethylether erhalten.

**Polyepoxid-Amin-Addukt B**

683 T eines Bisphenol A-Epoxidharzes mit einem Äquivalentgewicht von 480 werden in 339 T Ethylglykol aufgelöst und auf 80°C erhitzt. Anschließend werden 50,4 T Diethanolamin und 57,8 T Diisopropylaminoethylamin gleichzeitig zugetropft. Die Reaktionsmischung wird 3 Stunden bei 80°C gehalten.

**Amin Addukt C**

Es wird ein Polyaminoamid nach bekannten Methoden aus dimeren Fettsäuren und Diethylentriamin hergestellt, so daß ein Polyaminoamid mit folgenden Kennzahlen entsteht.

| | |
|---|---|
| Festkörper | : 100 % |
| Aminzahl | : 300 |
| Säurezahl | : ca. 2 |
| Viskosität bei 75°C | : 3 500 mPa.s |

Das Polyaminoamid wird in Dimethyldiethylenglykol aufgelöst, so daß eine 70 %-ige Lösung entsteht.

**III. Härtung der Harze**

1 000 T einer 70 %-igen lösung des basischen Polymeren A werden mit 300 T Titandioxid und 50 T Bleisilikat versetzt. Die Mischung wird auf einem Dreiwalzenstuhl abgerieben. In entsprechender Weise wird auch mit dem basischen Polymeren B und C verfahren.

Die Zusammensetzung der Elektrophoresebäder, die Härtungsbedingungen sowie die Eigenschaften der gehärteten Produkte sind aus nachstehender Tabelle 1 ersichtlich.

Die Herstellung der Elektrophoresebäder wird so durchgeführt, daß jeweils die in Tabelle 1 angegebene Menge des pigmentierten basischen Polymeren A, B oder C mit der ebenfalls angegebenen Menge an Härter und Katalysator sowie Ameisensäure zunächst mit einem schnell laufenden Rührwerk homogenisiert und anschließend langsam mit deionisiertem Wasser versetzt wird, bis der Festkörpergehalt des Elektrophoresebades ca. 19 % beträgt.

Die elektrophoretische Abscheidung geschieht in der Weise, daß in eine Kunststoffwanne mit einer Anode aus Edelstahl und einem als Kathode geschalteten Blech mit einer Zinkphosphat-Bonderschicht die 19 %-igen Elektrophoresebäder eingefüllt werden und die Abscheidung unter Anlegung einer Gleichspannung, die jeweils 50 V unter der Aufbruchspannung liegt, während 2 Minuten erfolgt. Durch Zusatz von Ethylenglykolmonohexylether zu den Elektrophoresebädern wird die Schichtdicke der abgeschiedenen Filme so einreguliert, daß die Schichtdicke der eingebrannten Filme zwischen 18 und 25 µm liegt, außer im Beispiel 22, wo 50 µm erhalten werden. Die abgeschiedenen Filme werden mit entsalztem Wasser abgespült und anschließend, wie in Tabelle 1 angegeben, eingebrannt. Die so beschichteten Bleche zeigten die in Tabelle 1 angegebenen lacktechnischen Eigenschaften.

**Tabelle 1**

| Anwendungsbeispiel Nr. | Pigmentiertes Menge an A | basisches Harz Menge an B | MEQ+ | Härter Beispiel | aus Menge T | Bleioctoat Metallgehalt 24 % | Zinkoctoat Metallgehalt 8 % | Einbrennbedingung min/°C | Erichsen tiefung in mm | Korrosionstest nach ASTM B 117/6 + (bis 2 mm Unterwanderung am Andreaskreuz) |
|---|---|---|---|---|---|---|---|---|---|---|
| 13 | 1350 | - | 30 | 1 | 195 | 30 | - | 20/160 | 7,2 | >500 |
| 14 | 1350 | - | 30 | 2 | 175 | 30 | - | 20/180 | 6,7 | >400 |
| 15 | 1350 | - | 35 | 3 | 175 | - | 30 | 20/170 | 6,3 | >600 |
| 16 | 1350 | - | 35 | 4 | 234 | 15 | 20 | 20/200 | 7,0 | >600 |
| 17 | 1350 | - | 35 | 5 | 292 | 15 | - | 20/160 | 5,2 | >550 |
| 18 | 1350 | - | 35 | 6 | 230 | 30 | - | 20/150 | 5,3 | >400 |
| 19 | 1350 | - | 35 | 7 | 220 | 15 | 10 | 20/170 | 4,8 | >600 |
| 20 | 1350 | - | 35 | 8 | 240 | 30 | - | 20/190 | 6,7 | >700 |
| 21 | - | 1350 | 55 | 2 | 175 | 20 | - | 20/170 | 6,4 | >650 |
| 22 | - | 1350 | 60 | 4 | 246 | 30 | 5 | 20/190 | 6,9 | >700 |
| 23 | - | 1350 | 50 | 3 | 175 | - | 30 | 20/180 | 7,6 | >400 |
| 24 | - | 1350 | 60 | 8 | 240 | 10 | 10 | 20/150 | 4,3 | >500 |
| 25 | 1350 Teile Aminaddukt C | | 60 | 3 | 300 | 30 | - | 20/160 | 8,0 | >600 |

**Tabelle 1** Lacktechnische Eigenschaften von abgeschiedenen und eingebrannten Elektrophoresbädern.
+MEQ= Milliäquivalent Ameisensäure pro 100 T Bindemittel fest.

**Patentansprüche** für die Vertragsstaten: BE, DE, FR, BG, IT, NL, SE

1. Verwendung von Michael-Additionsprodukten aus zur Michael-Addition befähigten Mono- oder Dicarbonsäureestern aus der Gruppe Ester der Malonsäure, Cyanessigsäure, Acetessigsäure, Acetondicarbonsäure oder an der CH-aciden Methylengruppe mono-alkylsubstituierten Derivaten dieser Säuren, und Verbindungen, die mindestens eine zur Michael-Addition befähigte Doppelbindung enthalten aus der Gruppe Ester, Amid, Urethan- oder Harnstoffderivat einer α,β-ungesättigten Mono- oder Dicarbonsäure, wobei diese Michael-Additionsprodukte im Mittel mindestens zwei umesterungs- bzw. umamidierungsfähige Estergruppen pro Molekül aufweisen, als Härter für Kunstharze, die Hydroxyl und/oder Aminogruppen enthalten.

2. Verwendung nach Anspruch 1, dadurch gekennzeichnet, daß der zur Michael-Addition befähigte Carbonsäureester ein Methyl-, Ethyl- oder 2-Ethylhexylester ist.

3. Verwendung nach Anspruch 1 und/oder 2, dadurch gekennzeichnet, daß die zur Michael-Addition befähigte, Doppelbindungen enthaltende Verbindung ein Ester, ein Amid, oder ein Harnstoffderivat der Acrylsäure, Methacrylsäure, Dimethylacrylsäure, Crotonsäure, Maleinsäure und/oder Fumarsäure ist.

4. Verwendung nach mindestens einem der Ansprüche 1 bis 3, dadurch gekennzeichnet, daß die zur Michael-Addition befähigte, Doppelbindungen enthaltende Verbindung ein Ester einer α,β-ungesättigten Mono- oder Dicarbonsäure mit einem Polyol darstellt.

5. Verwendung nach Anspruch 4, dadurch gekennzeichnet, daß der Ester der α,β-ungesättigen Säure ausgewählt ist aus der Gruppe Alkandioldiacrylat oder -trimethacrylat, Trimethylolpropantriacrylat oder -trimethacrylat, Pentaerythrit-tetraacrylat oder -tetra-methacrylat.

6. Verwendung nach Anspruch 1, dadurch gekennzeichnet, daß das Michael-Additionsprodukt ein substituiertes Urethan oder ein substituierter Harnstoff der allgemeinen Formel

$$R_m[A-B-\overset{\overset{\displaystyle O}{\|}}{C}-Ac-M]_m \qquad (I)$$

ist, in der

| | |
|---|---|
| $R_m$ | der m-wertige Rest R-$(NHCO\text{-})_m$ eines Isocyanats, |
| m | eine ganze Zahl, mindestens 1 ist, |
| A | eine chemische Bindung oder einen Amidoalkylen-, einen O-Alkylen, einen Amidocycloalkylen- oder einen O-Cycloalkylen-Rest bedeutet, |
| B | eine Amidogruppe oder ein Sauerstoffatom ist, |
| COAc | der Acylrest einer α,β-ungesättigten Mono- oder Dicarbonsäure ist, und |
| M | den durch Michael-Addition an das Molekül addierten Ester einer Mono- oder Dicarbonsäure bedeutet, |

mit der Maßgabe, daß das Molekül mindestens zwei Estergruppen aus der zur Michael-Addition befähigten Säure enthält, und daß B eine Amidogruppe ist, wenn A eine chemische Bindung bezeichnet.

7. Verwendung nach Anspruch 6, dadurch gekennzeichnet, daß A in Formel (I) ein Rest der Formel

$$\begin{array}{l} -O-CH-CH_2- \\ \quad\;\; | \\ \quad\; CH_2 \\ \quad\; O-C-R' \\ \quad\quad\;\; \| \\ \quad\quad\;\; O \end{array} \qquad (II)$$

ist,
wobei R' ein in α-Stellung verzweigter Alkylrest mit 9 - 11 C-Atomen, ist und B eine Sauerstoffbrücke darstellt.

8. Verwendung nach Anspruch 1, dadurch gekennzeichnet, daß das Michael-Additionsprodukt aus einem zur Michael-Addition befähigten Mono- oder Dicarbonsäureester und einem Mischester aus einer α-β-ungesättigten Dicarbonsäure, einem Diol und dem Glycerinester einer in α-Stellung verzweigten Carbonsäure mit 9 - 11 C-Atomen besteht.

9. Verwendung nach Anspruch 1, dadurch gekennzeichnet, daß das Michael-Additionsprodukt abgeleitet ist von einem Amid der allgemeinen Formel

$$R_n[A-Ac]_n \qquad (III),$$

in welcher

$R_n$ der Rest eines n-wertigen Amins,
A eine Amidogruppe,
Ac der Acylrest einer α,β-ungesättigten Mono- oder Dicarbonsäure, und
n eine ganze Zahl, mindestens 1, ist.

10. Verwendung nach Anspruch 9, wobei das Michael-Additionsprodukt aus 2 Mol eines zur Michael-Addition befähigten Mono- oder Dicarbonsäureesters und Methylenbisacrylamid, Toluylenbisacrylamid oder Hexamethylenbisacrylamid besteht.

11. Verwendung nach Anspruch 1, dadurch gekennzeichnet, daß das Michael-Additionsprodukt abgeleitet ist von einem Ester oder Amid eines Polyetherpolyols, Polyesterpolyols, Aminopolyetherpolyols, Aminopolyesterpolyols oder Polyaminopolyamids mit einer α,β-ungesättigten Mono- oder Dicarbonsäure, und daß das Additionsprodukt jeweils noch freie Hydroxyl- und/oder primäre oder sekundäre Aminogruppen enthält.

12. Verwendung nach Anspruch 1, dadurch gekennzeichnet, daß sich das Michael-Additionsprodukt von einem Ester eines Epoxids mit einer α,β-ungesättigten Mono- oder Dicarbonsäure ableitet.

13. Verwendung nach mindestens einem der Ansprüche 1, bis 12, dadurch gekennzeichnet, daß das Michael-Additionsprodukt chemisch an das Hydroxyl- und/oder Aminogruppen enthaltende Kunstharz gebunden ist.

14. Verwendung nach mindestens einem der Ansprüche 1 bis 13, dadurch gekennzeichnet, daß das Hydroxyl- und/oder Aminogruppen enthaltende Kunstharz eine Verbindung ist aus der Gruppe Polyetherpolyole, Polyesterpolyole,

Aminopolyetherpolyole, Aminoesterpolyole, Polyaminopolyamide, Hydroxyl- und/oder Aminogruppen enthaltende ungesättigte Polyester oder Polyacrylate.

15. Verwendung der Michael-Additionsprodukte nach mindestens einem der Ansprüche 1 bis 14 als Härter in wäßrigen Lackzubereitungen, insbesondere in Elektro-Tauchlacken.

16. Selbsthärtende Kunstharze, enthaltend Hydroxyl- und/oder Aminogruppen und enthaltend in chemischer Bindung an das Kunstharzmolekül die Michael-Additionsprodukte gemäß mindestens einem der Ansprüche 1 bis 14.

17. Zweikomponenten-Lacke auf der Basis von Kunstharzen, die Hydroxyl- und/oder Aminogruppen enthalten, und Härtern, dadurch gekennzeichnet, daß die Härter die Michael-Additionsprodukte gemäß mindestens einem der Ansprüche 1 bis 14 darstellen.

**Patentansprüche für den Vertragsstaat:** AT

1. Verwendung von Michael-Additionsprodukten aus zur Michael-Addition befähigten Mono- oder Dicarbonsäureestern aus der Gruppe Ester der Malonsäure, Cyanessigsäure, Acetessigsäure, Acetondicarbonsäure oder an der/CH-aciden Methylengruppe mono-alkylsubstituierten Derivaten dieser Säuren, und Verbindungen, die mindestens eine zur Michael-Addition befähigte Doppelbindung enthalten aus der Gruppe Ester, Amid, Urethan- oder Harnstoffderivat einer α,β-ungesättigten Mono- oder Dicarbonsäure, wobei diese Michael-Additionsprodukte im Mittel mindestens zwei umesterungs- bzw. umamidierungsfähige Estergruppen pro Molekül aufweisen, als Härter für Kunstharze, die Hydroxyl und/oder Aminogruppen enthalten.

2. Verwendung nach Anspruch 1, dadurch gekennzeichnet, daß der zur Michael-Addition befähigte Carbonsäureester ein Methyl-, Ethyl- oder 2-Ethylhexylester ist.

3. Verwendung nach Anspruch 1 und/oder 2, dadurch gekennzeichnet, daß die zur Michael-Addition befähigte, Doppelbindungen enthaltende Verbindung ein Ester, ein Amid, oder ein Harnstoffderivat der Acrylsäure, Methacrylsäure, Dimethylacrylsäure, Crotonsäure, Maleinsäure und/oder Fumarsäure ist.

4. Verwendung nach mindestens einem der Ansprüche 1 bis 3, dadurch gekennzeichnet, daß die zur Michael-Addition befähigte, Doppelbindungen enthaltende Verbindung ein Ester einer α,β-ungesättigten Mono- oder Dicarbonsäure mit einem Polyol darstellt.

5. Verwendung nach Anspruch 4, dadurch gekennzeichnet, daß der Ester der α,β-ungesättigten Säure ausgewählt ist aus der Gruppe Alkandioldiacrylat oder -dimethacrylat, Trimethylolpropantriacrylat oder -trimethacrylat, Pentaerythrit-tetraacrylat oder -tetra-methacrylat.

6. Verwendung nach Anspruch 1, dadurch gekennzeichnet, daß das Michael-Additionsprodukt ein substituiertes Urethan oder ein substituierter Harnstoff der allgemeinen Formel

$$R_m[A-B-\overset{\overset{\displaystyle O}{\|}}{C}-Ac-M]_m \qquad (I)$$

ist, in der

| | |
|---|---|
| $R_m$ | der m-wertige Rest R-$(NHCO\text{-})_m$ eines Isocyanats, |
| m | eine ganze Zahl, mindestens 1 ist, |
| A | eine chemische Bindung oder einen Amidoalkylen-, einen O-Alkylen, einen Amidocycloalkylen- oder einen O-Cycloalkylen-Rest bedeutet, |
| B | eine Amidogruppe oder ein Sauerstoffatom ist, |
| COAc | der Acylrest einer α,β-ungesättigten Mono- oder Dicarbonsäure ist, und |
| M | den durch Michael-Addition an das Molekül addierten Ester einer Mono- oder Dicarbonsäure bedeutet, |

mit der Maßgabe, daß das Molekül mindestens zwei Estergruppen aus der zur Michael-Addition befähigten Säure enthält, und daß B eine Amidogruppe ist, wenn A eine chemische Bindung bezeichnet.

7. Verwendung nach Anspruch 6, dadurch gekennzeichnet, daß A in Formel (I) ein Rest der Formel

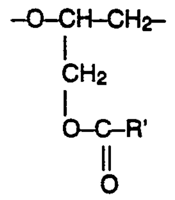

(II)

ist,
wobei R' ein in α-Stellung verzweigter Alkylrest mit 9 - 11 C-Atomen ist, und B eine Sauerstoffbrücke darstellt.

8. Verwendung nach Anspruch 1, dadurch gekennzeichnet, daß das Michael-Additionsprodukt aus einem zur Michael-Addition befähigten Mono- oder Dicarbonsäureester und einem Mischester aus einer α-β-ungesättigten Dicarbonsäure, einem Diol und dem Glycerinester einer in α-Stellung verzweigten Carbonsäure mit 9 - 11 C-Atomen besteht.

9. Verwendung nach Anspruch 1, dadurch gekennzeichnet, daß das Michael-Additionsprodukt abgeleitet ist von einem Amid der allgemeinen Formel

$R_n[A\text{-}Ac]_n$ (III),

in welcher

$R_n$ der Rest eines n-wertigen Amins,
A eine Amidogruppe,
Ac der Acylrest einer α,β-ungesättigten Mono- oder Dicarbonsäure, und
n eine ganze Zahl, mindestens 1, ist.

10. Verwendung nach Anspruch 9, wobei das Michael-Additionsprodukt aus 2 Mol eines zur Michael-Addition befähigten Mono- oder Dicarbonsäureesters und Methylenbisacrylamid, Toluylenbisacrylamid oder Hexamethylenbisacrylamid besteht.

11. Verwendung nach Anspruch 1, dadurch gekennzeichnet, daß das Michael-Additionsprodukt abgeleitet ist von einem Ester oder Amid eines Polyetherpolyols, Polyesterpolyols, Aminopolyetherpolyols, Aminopolyesterpolyols oder Polyminopolyamids mit einer α,β-ungesättigten Mono- oder Dicarbonsäure, und daß das Additionsprodukt jeweils noch freie Hydroxyl- und/oder primäre oder sekundäre Aminogruppen enthält.

12. Verwendung nach Anspruch 1, dadurch gekennzeichnet, daß sich das Michael-Additionsprodukt von einem Ester eines Epoxids mit einer α,β-ungesättigten Mono- oder Dicarbonsäure ableitet.

13. Verwendung nach mindestens einem der Ansprüche 1 bis 12, dadurch gekennzeichnet, daß das Michael-Additionsprodukt chemisch an das Hydroxyl- und/oder Aminogruppen enthaltende Kunstharz gebunden ist.

14. Verwendung nach mindestens einem der Ansprüche 1 bis 13, dadurch gekennzeichnet, daß das Hydroxyl- und/oder Aminogruppen enthaltende Kunstharz eine Verbindung ist aus der Gruppe Polyetherpolyole, Polyesterpolyole, Aminopolyetherpolyole, Aminoesterpolyole, Polyaminopolyamide, Hydroxyl- und/oder Aminogruppen enthaltende ungesättigte Polyester oder Polyacrylate.

15. Verwendung der Michael-Additionsprodukte nach mindestens einem der Ansprüche 1 bis 14 als Härter in wäßrigen Lackzubereitungen, insbesondere in Elektro-Tauchlacken.

16. Zweikomponenten-Lacke auf der Basis von Kunstharzen, die Hydroxyl- und/oder Aminogruppen enthalten, und Härtern, dadurch gekennzeichnet, daß die Härter die Michael-Additionsprodukte gemäß mindestens einem der Ansprüche 1 bis 14 darstellen.

**Claims** for the Contracting States: BE, DE, FR, GB, IT, NL, SE

1. The use of Michael addition products of monocarboxylic or dicarboxylic acid esters capable of undergoing Michael addition and formed from the group composed of esters of malonic acid, cyanoacetic acid, acetoacetic acid or acetonedicarboxylic acid or derivatives of these acids which are monosubstituted by alkyl at the CH-acid methylene group, and of compounds containing at least one double bond capable of undergoing Michael addition and formed from the group composed of an ester, amide, urethane or urea derivative of an α,β-unsaturated monocarboxylic or dicarboxylic acid, these Michael addition products containing, on average, at least two ester groups capable of transesterification or transamidation per molecule, as curing agents for synthetic resins containing hydroxyl and/or amino groups.

2. Use as claimed in claim 1, wherein the carboxylic acid ester capable of undergoing Michael addition is a methyl, ethyl or 2-ethylhexyl ester.

3. Use as claimed in claim 1 and/or 2, wherein the compound containing double bonds capable of undergoing Michael addition is an ester, an amide, or a urea derivative of acrylic acid, methacrylic acid, dimethylacrylic acid, crotonic acid, maleic acid and/or fumaric acid.

4. Use as claimed in at least one of claims 1 to 3, wherein the compound containing double bonds capable of undergoing Michael addition is an ester of an α,β-unsaturated monocarboxylic or dicarboxylic acid with a polyol.

5. Use as claimed in claim 4, wherein the ester of the α,β-unsaturated acid is selected from the group comprising an alkanediol diacrylate or dimethacrylate, trimethylolpropane triacrylate or trimethacrylate, or pentaerythritol tetraacrylate or tetramethacrylate.

6. Use as claimed in claim 1, wherein the Michael addition product is a substituted urethane or a substituted urea of the general formula

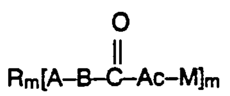

(I)

in which

| | |
|---|---|
| $R_m$ | is the m-valent radical R-$(NHCO\text{-})_m$ of an isocyanate, |
| m | is an integer, at least 1, |
| A | denotes a chemical bond or an amidoalkylene, an O-alkylene, an amidocycloalkylene or an O-cycloalkylene radical, |
| B | is an amido group or an oxygen atom, |
| COAc | is the acyl radical of an α,β-unsaturated monocarboxylic or dicarboxylic acid and |
| M | denotes the ester of a monocarboxylic or dicarboxylic acid which has been caused to undergo an addition reaction by means of Michael addition to the molecule, |

subject to the proviso that the molecule contains at least two ester groups from the acid capable of undergoing Michael addition, and that B is an amido group if A designates a chemical bond.

7. Use as claimed in claim 6, wherein A in formula (I) is a radical of the formula

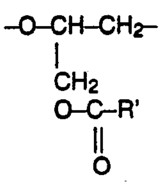

(II)

in which R' represents an alkyl radical which has 9 - 11 carbon atoms and is branched in the α-position, and B represents an oxygen bridge.

8. Use as claimed in claim 1, wherein the Michael addition product is composed of a monocarboxylic or dicarboxylic acid ester, capable of undergoing Michael addition, and a mixed ester formed from an α,β-unsaturated dicarboxylic acid, a diol and the glycidyl ester of a carboxylic acid which has 9 - 11 carbon atoms and is branched in the α-position.

9. Use as claimed in claim 1, wherein the Michael addition product is derived from an amide of the general formula

$$R_n[A\text{–}Ac]_n \qquad (III)$$

in which

$R_n$ is the radical of an n-valent amine,
A is an amido group,
Ac is the acyl radical of an α,β-unsaturated monocarboxylic or dicarboxylic acid and
n is an integer, at least 1.

10. Use as claimed in claim 9, wherein the Michael addition product is composed of 2 moles of a monocarboxylic or dicarboxylic acid ester, capable of undergoing Michael addition, and methylenebisacrylamide, toluylenebisacrylamide or hexamethylenebisacrylamide.

11. Use as claimed in claim 1, wherein the Michael addition product is derived from an ester or amide of a polyetherpolyol, polyester-polyol, aminopolyether-polyol, aminopolyester-polyol or polyamino-polyamide with an α,β-unsaturated

monocarboxylic or dicarboxylic acid, and the addition product still contains in each case free hydroxyl groups and/or primary or secondary amino groups.

12. Use as claimed in claim 1, wherein the Michael addition product is derived from an ester of an epoxide with an α,β-unsaturated monocarboxylic or dicarboxylic acid.

13. Use as claimed in at least one of claims 1 to 12, wherein the Michael addition product is chemically bound to the synthetic resin containing the hydroxyl and/or wherein the synthetic resin containing hydroxyl and/or amino groups is a compound belonging to the group comprising polyether-polyols, polyester-polyols, aminopolyether-polyols, aminoester-polyols, polyamino-polyamides, unsaturated polyesters or polyacrylates containing hydroxyl and/or amino groups.

15. The use of the Michael addition products as claimed in at least one of claims 1 to 14 as curing agents in aqueous paint formulations, in particular in electro-deposition paints.

16. Self-curing synthetic resins containing hydroxyl and/or amino groups and containing, chemically bound to the synthetic resin molecule, the Michael addition products as claimed in at least one of claims 1 to 14.

17. Two-component paints based on synthetic resins containing hydroxyl and/or amino groups, and curing agents, wherein the curing agents constitute the Michael addition products as claimed in at least one of claims 1 to 14.

**Claims** for the Contracting State: AT

1. The use of Michael addition products of monocarboxylic or dicarboxylic acid esters capable of undergoing Michael addition and formed from the group composed of esters of malonic acid, cyanoacetic acid, acetoacetic acid or acetonedicarboxylic acid or derivatives of these acids which are monosubstituted by alkyl at the CH-acid methylene group, and of compounds containing at least one double bond capable of undergoing Michael addition and formed from the group composed of an ester, amide, urethane or urea derivative of an α,β-unsaturated monocarboxylic or dicarboxylic acid, these Michael addition products containing, on average, at least two ester groups capable of transesterification or transamidation per molecule, as curing agents for synthetic resins containing hydroxyl and/or amino groups.

2. Use as claimed in claim 1, wherein the carboxylic acid ester capable of undergoing Michael addition is a methyl, ethyl or 2-ethylhexyl ester.

3. Use as claimed in claim 1 and/or 2, wherein the compound containing double bonds capable of undergoing Michael addition is an ester, an amide, or a urea derivative of acrylic acid, methacrylic acid, dimethylacrylic acid, crotonic acid, maleic acid and/or fumaric acid.

4. Use as claimed in at least one of claims 1 to 3, wherein the compound containing double bonds capable of undergoing Michael addition is an ester of an α,β-unsaturated monocarboxylic or dicarboxylic acid with a polyol.

5. Use as claimed in claim 4, wherein the ester of the α,β-unsaturated acid is selected from the group comprising an alkanediol diacrylate or dimethacrylatate, trimethylolpropane triacrylate or trimethacrylate, or pentaerythritol tetraacrylate or tetramethacrylate.

6. Use as claimed in claim 1, wherein the Michael addition product is a substituted urethane or a substituted urea of the general formula

$$R_m[A-B-\overset{\overset{O}{\|}}{C}-Ac-M]_m \qquad (I)$$

in which

| | |
|---|---|
| $R_m$ | is the m-valent radical R-(NHCO-)$_m$ of an isocyanate, |
| m | is an integer, at least 1, |
| A | denotes a chemical bond or an amidoalkylene, an O-alkylene, an amidocycloalkylene or an O-cycloalkylene radical, |
| B | is an amido group or an oxygen atom, |
| COAc | is the acyl radical of an α,β-unsaturated monocarboxylic or dicarboxylic acid and |
| M | denotes the ester of a monocarboxylic or dicarboxylic acid which has been caused to undergo an addition reaction by means of Michael addition to the molecule, |

subject to the proviso that the molecule contains at least two ester groups from the acid capable of undergoing Michael addition, and that B is an amido group if A designates a chemical bond.

7. Use as claimed in claim 6, wherein A in formula (I) is a radical of the formula

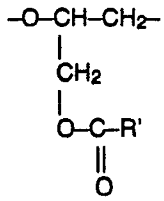

(II)

in which R' represents an alkyl radical which has 9 - 11 carbon atoms and is branched in the α-position, and B represents an oxygen bridge.

8. Use as claimed in claim 1, wherein the Michael addition product is composed of a monocarboxylic or dicarboxylic acid ester, capable of undergoing Michael addition, and a mixed ester formed from an α,β-unsaturated dicarboxylic acid, a diol and the glycidyl ester of a carboxylic acid which has 9 - 11 carbon atoms and is branched in the α-position.

9. Use as claimed in claim 1, wherein the Michael addition product is derived from an amide of the general formula

$$R_n[A–Ac]_n \qquad (III)$$

in which

| | |
|---|---|
| $R_n$ | is the radical of an n-valent amine, |
| A | is an amido group, |
| Ac | is the acyl radical of an α,β-unsaturated monocarboxylic or dicarboxylic acid and |
| n | is an integer, at least 1. |

10. Use as claimed in claim 9, wherein the Michael addition product is composed of 2 moles of a monocarboxylic or dicarboxylic acid ester, capable of undergoing Michael addition, and methylenebisacrylamide, toluylenebisacrylamide or hexamethylenebisacrylamide.

11. Use as claimed in claim 1, wherein the Michael addition product is derived from an ester or amide of a polyetherpolyol, polyester-polyol, aminopolyether-polyol, aminopolyester-polyol or polyamino-polyamide with an α,β-unsaturated monocarboxylic or dicarboxylic acid, and the addition product still contains in each case free hydroxyl groups and/or primary or secondary amino groups.

12. Use as claimed in claim 1, wherein the Michael addition product is derived from an ester of an epoxide with an α,β-unsaturated monocarboxylic or dicarboxylic acid.

13. Use as claimed in at least one of claims 1 to 12, wherein the Michael addition product is chemically bound to the synthetic resin containing the hydroxyl and/or amino groups.

14. Use as claimed in at least one of claims 1 to 13, wherein the synthetic resin containing hydroxyl and/or amino groups is a compound belonging to the group comprising polyether-polyols, polyester-polyols, aminopolyether-polyols, aminoester-polyols, polyamino-polyamides, unsaturated polyesters or polyacrylates containing hydroxyl and/or amino groups.

15. The use of the Michael addition products as claimed in at least one of claims 1 to 14 as curing agents in aqueous paint formulations, in particular in electro-deposition paints.

16. Two-component paints based on synthetic resins containing hydroxyl and/or amino groups, and curing agents, wherein the curing agents constitute the Michael addition products as claimed in at least one of claims 1 to 14.

**Revendications** pour les Etats Contractants: BE, DE, FR, GB, IT, NL, SE

1. Utilisation de produits d'addition de Michael, constitués de monoesters ou de diesters d'acides dicarboxyliques, capables d'une addition de Michael, choisis parmi des esters de l'acide malonique de l'acide cyanacétique, de l'acide acéto-acétique, de l'acide acétonedicarboxylique ou de dérivés de ces acides, comportant un groupe alkyle fixé comme substituant sur le groupe méthylène CH-acide, et des composés contenant au moins une double liaison capable d'une addition de Michael et choisis parmi un dérivé de type ester, amide, uréthanne ou urée d'un acide monocarboxylique ou dicarboxylique à insaturation en alpha-bêta, ces produits de l'addition de Michael présentant en moyenne, par molécule, au moins deux groupes esters capables d'une transestérification ou d'une transamidation, comme durcisseurs pour des résines synthétiques ou plastiques, qui contiennent des groupes hydroxyles et/ou amino.

2. Utilisation selon la revendication 1, caractérisée en ce que l'ester d'acide carboxylique capable d'une addition de Michael est un ester méthylique, éthylique ou d'éthyl-2 hexyle.

3. Utilisation selon la revendication 1 et/ou 2, caractérisée en ce que le composé, contenant des doubles liaisons et capable d'une addition de Michael, est un ester, un amide ou un dérivé d'urée de l'acide acrylique, de l'acide méthacrylique, de l'acide diméthylacrylique, l'acide crotonique, de l'acide maléique et/ou de l'acide fumarique.

4. Utilisation selon l'une au moins des revendications 1 à 3, caractérisée en ce que le composé contenant des doubles liaisons et capable d'une addition de Michael est un ester d'un acide monocarboxylique ou dicarboxylique à insaturation en alpha-bêta, avec un polyol.

5. Utilisation selon la revendication 4, caractérisée en ce que l'ester d'acide insaturé en alpha-bêta est choisi parmi un diacrylate ou diméthacrylate d'alcanediol, un triacrylate ou triméthacrylate de triméthylolpropane, un tétraacrylate ou tétraméthacrylate de pentaérythritol.

6. Utilisation selon la revendication 1, caractérisée en ce que le produit de l'addition de Michael est un uréthanne substitué ou une urée substituée répondant à la formule générale:

$$R_m A\text{–}B\text{–}\overset{\overset{\Large O}{\|}}{C}\text{–}Ac\text{–}M]_m \qquad (I)$$

dans laquelle:

| | |
|---|---|
| $R_m$ | représente le reste R-(NHCO-)$_m$, de valence m, d'un isocyanate, |
| m | est un nombre entier valant au moins 1, |
| A | est une liaison chimique ou représente un reste amidoalkylène, un reste O-alkylène, un reste amidocycloalkylène ou un reste O-cycloalkylène, |
| B | représente un groupe amido ou un atome d'oxygène, |
| COAc | représente le reste acide d'un acide monocarboxylique ou dicarboxylique insaturé en alpha-bêta, et |
| M | représente l'ester d'un acide monocarboxylique ou dicarboxylique fixé sur la molécule par addition de Michael, |

à la condition que la molécule contienne au moins deux groupes esters dérivant de l'acide capable d'une addition de Michael, et que B représente un groupe amido lorsque A représente une liaison chimique.

7. Utilisation selon la revendication 6, caractérisée en ce que, dans la formule (I), A représente un reste de formule:

```
–O–CH–CH2–
    |
    CH2
    |                                   (II)
    O–C–R'
      ||
      O
```

dans laquelle R' représente un reste alkyle ayant 9 à 11 atomes de carbone, ramifié en position alpha, et B est un pont oxygène.

8. Utilisation selon la revendication 1, caractérisée en ce que le produit de l'addition de Michael consiste en un ester d'acide monocarboxylique ou dicarboxylique, capable d'une addition de Michael, et en un ester mixte d'un acide dicarboxylique insaturé en alpha-bêta, d'un diol et de l'ester de glycérol d'un acide carboxylique ayant 9 à 11 atomes de carbone et qui est ramifié en position alpha.

9. Utilisation selon la revendication 1, caractérisée en ce que le produit de l'addition de Michael dérive d'un amide de formule générale:

$$R_n[A\text{–}Ac]_n \qquad (III)$$

dans laquelle:

$R_n$ représente le reste d'une amine de valence n,
A est un groupe amido,
Ac représente le reste d'un acide monocarboxylique ou dicarboxylique insaturé en alpha-bêta, et
n est un nombre entier, valant au moins 1.

10. Utilisation selon la revendication 9, dans laquelle le produit de l'addition de Michael consiste en 2 moles d'un ester d'acide monocarboxylique ou dicarboxlique, capable d'une addition de Michael, et de méthylènebisacrylamine, de toluylène bisacrylamide ou d'hexaméhylènebisacrylamide.

11. Utilisation selon la revendication 1, caractérisée en ce que le produit de l'addition de Michael dérive d'un ester ou amide d'un polyétherpolyol, d'un polyesterpolyol, d'un aminopolyéther-polyol, d'un aminopolyester-polyol ou d'un polyaminopolyamide avec un acide monocarboxylique ou dicarboxylique à insaturation en alpha-bêta, et en ce que le produit d'addition contient toujours encore des groupes hydroxyles et/ou amino primaires ou secondaires libres.

12. Utilisation selon la revendication 1, caractérisée en ce que le produit de l'addition de Michael dérive d'un ester d'un époxyde avec un acide monocarboxylique ou dicarboxylique insaturé en alpha-bêta.

13. Utilisation selon l'une au moins des revendications 1 à 12, caractérisée en ce que le produit de l'addition de Michael est chimiquement fixé sur la résine synthétique, ou matière plastique, contenant des groupes hydroxyles et/ou amino.

14. Utilisation selon l'une au moins des revendicaitions 1 à 13, caractérisée en ce que la résine synthétique, contenant des groupes hydroxyles et/ou amino, est un composé choisi parmi des polyéther-polyols, des polyester -polyols, des aminopolyéther-polyols, des amino-esters polyols, des polyaminopolyamides, des polyesters insaturés ou polyacrylates contenant des groupes hydroxyles et/ou amino.
15. Utilisation des produits de l'addition de Michael selon l'une au moins des revendications 1 à 14, à titre de durcisseur dans des préparations aqueuses pour laques et vernis, en particulier dans des vernis pour dépôt électrolytique par immersion.

16. Résine synthétique, ou matière plastique, autodurcissable, contenant des groupes hydroxyles et/ou amino et contenant, en liaison chimique sur la molécule de la résine synthétique ou matière plastique, les produits de l'addition de Michael selon l'une au moins des revendications 1 à 14.

17. Vernis à deux composants, à base de résine synthétique, contenant des groupes hydroxyles et/ou amino, et des durcisseurs, vernis caractérisé en ce que le durcisseur représente les produits d'addition de Michael selon l'une au moins des revendications 1 à 14.

**Revendications** pour l'état Contractant: AT

1. Utilisation de produits d'addition de Michael, constitués de monoesters ou de diesters d'acides dicarboxyliques, capables d'une addition de Michael, choisis parmi des esters de l'acide malonique, de l'acide cyanacétique, de l'acide acéto-acétique, de l'acide acétonedicarboxylique ou de dérivés de ces acides, comportant un groupe alkyle fixé comme subsituant sur le groupe méthylène CH-acide, et des composés contenant au moins une double liaison capable d'une addition de Michael et choisis parmi un dérivé de type ester, amide, uréthanne ou urée d'un acide monocarboxylique ou dicarboxylique à insaturation en alpha-bêta, ces produits de l'addition de Michael présentant en moyenne, par molécule, au moins deux groupes esters capables d'une transestérification ou d'une transamidation, comme durcisseurs pour des résines synthétiques ou plastiques, qui contiennent des groupes hydroxyles et/ou amino.

2. Utilisation selon la revendication 1, caractérisée en ce que l'ester d'acide carboxylique capable d'une addition de Michael est un ester méthylique, éthylique ou d'éthyl-2 hexyle.

3. Utilisation selon la revendication 1 et/ou 2, caractérisée en ce que le composé, contenant des doubles liaisons et capable d'une addition de Michael, est un ester, un amide ou un dérivé d'urée de l'acide acrylique, de l'acide méthacrylique, de l'acide diméthylacrylique, l'acide crotonique, de l'acide maléique et/ou de l'acide fumarique.

4. Utilisation selon l'une au moins des revendications 1 à 3, caractérisée en ce que le composé contenant des doubles liaisons et capable d'une addition de Michael est un ester d'un acide monocarboxylique ou dicarboxylique à insaturation en alpha-bêta, avec un polyol.

5. Utilisation selon la revendication 4, caractérisée en ce que l'ester d'acide insaturé en alpha-bêta est choisi parmi un diacrylate ou diméthacrylate d'alcanediol, un triacrylate ou triméthacrylate de triméthylolpropane, un tétraacrylate ou tétrométhacrylate de pentaérythritol.

6. Utilisation selon la revendication 1, caractérisée en ce que le produit de l'addition de Michael est un uréthanne substitué ou une urée substituée répondant à la formule générale:

$$R_m[A-B-\overset{\overset{\Large O}{\|}}{C}-Ac-M]_m \qquad (I)$$

dans laquelle:

| | |
|---|---|
| $R_m$ | représente le reste -(NHCO-)$_m$, de valence m, d'un isocyanate, |
| m | est un nombre entier valant au moins 1, est une liaison chimique ou représente un reste amidoalkylène, un reste O-alkylène, un reste amidocycloalkylène ou un reste O-cycloalkylène, |
| B | représente un groupe amido ou un atome d'oxygène, |
| COAc | représente le reste acyle d'un acide monocarboxylique ou dicarboxylique insaturé en alpha-bêta, et |
| M | représente l'ester d'un acide monocarboxylique ou dicarboxylique fixé sur la molécule par addition de Michael, |

à la condition que la molécule contienne au moins deux groupes esters dérivant de l'acide capable d'une addition de Michael, et que B représente un groupe amido lorsque A représente une liaison chimique.

7. Utilisation selon la revendication 6, caractérisée en ce que dans la formule (I), A représente un reste de formule:

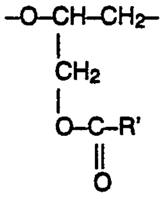

(II)

dans laquelle R' représente un reste alkyle ayant 9 à 11 atomes de carbone, ramifié en position alpha, et B est un pont oxygène.

8. Utilisation selon la revendication 1, caractérisée en ce que le produit de l'addition de Michael consiste en un ester d'acide monocarboxylique ou dicarboxylique, capable d'une addition de Michael, et en un ester mixte d'un acide dicarboxylique insaturé en alpha-bêta, d'un diol et de l'ester de glycérol d'un acide carboxylique ayant 9 à 11 atomes de carbone et qui est ramifié en position alpha.

9. Utilisation selon la revendication 1, caractérisée en ce que le produit de l'addition de Michael dérive d'un amide de formule générale:

$$R_n[A\text{–}Ac]_n \qquad (III)$$

dans laquelle:

$R_n$ représente le reste d'une amine de valence n,
A est un groupe amido,
Ac représente le reste d'un acide monocarboxylique ou dicarboxylique insaturé en alpha-bêta, et
n est un nombre entier, valant au moins 1.

10. Utilisation selon la revendication 9, dans laquelle le produit de l'addition de Michael consiste en 2 moles d'un ester d'acide monocarboxylique ou dicarboxylique, capable d'une addition de Michael, et de méthylènebisacrylamine, de toluylène bisacrylamide ou d'hexaméthylènebisacrylamide.

11. Utilisation selon la revendication 1, caractérisée en ce que le produit de l'addition de Michael dérive d'un ester ou amide d'un polyétherpolyol, d'un polyesterpolyol, d'un aminopolyéther-polyol d'un aminopolyester-polyol ou d'un polyaminopolyamide avec un acide monocarboxylique ou dicarboxylique à insaturation en alpha-bêta, et en ce que le produit d'addition contient toujours encore des groupes hydroxyles et/ou amino primaires ou secondaires libres.

12. Utilisation selon la revendication 1, caractérisée en ce que le produit de l'addition de Michael dérive d'un ester d'un époxyde avec un acide monocarboxylique ou dicarboxylique insaturé en alpha-bêta.

13. Utilisation selon l'une du moins des revendications 1 à 12, caractérisée en ce que le produit de l'addition de Michael est chimiquement fixé sur la résine synthétique, ou matière plastique, contenant des groupes hydroxyles et/ou amino.

14. Utilisation selon l'une au moins des revendications 1 à 13, caractérisée en ce que la résine synthétique, contenant des groupes hydroxyles et/ou amino, est un composé choisi parmi des polyéther-polyols, des polyester -polyols, des aminopolyéther-polyols, des amino-esters polyols, des polyaminopolyamides, des polyesters insaturés ou polyacrylates contenant des groupes hydroxyles et/ou amino.

15. Utilisation des produits de l'addition de Michael selon l'une au moins des revendications 1 à 14 à titre de durcisseur

dans des préparations aqueuses pour laques et vernis, en particulier dans des vernis pour dépôt électrolytique par immersion.

16. Vernis à deux composants, à base de résine synthétique, contenant des groupes hydroxyles et/ou amino, et des durcisseurs, vernis caractérisée en ce que les durcisseurs représentent les produits d'addition de Michael selon l'une au moins des revendications 1 à 14.